# EUROPEAN PATENT APPLICATION

(11) **EP 4 765 901 A2**
(43) Date of publication of application: **24.06.2026**
(21) Application number: 26156132.8
(22) Date of filing: 23.08.2022
(51) Int. Cl.: H04W 4/70

(54) **SIDELINK COMMUNICATION METHOD AND DEVICE**

(30) Priority: 31.08.2021 CN 202111011966
(62) Divisional of application: 22863227.9
(71) Applicant: Huawei Technologies Co., Ltd., Shenzhen, Guangdong 518129 (CN)
(72) Inventor: PENG, Wenjie, Shenzhen, 518129 (CN)
(74) Representative: Gill Jennings & Every LLP

(57) **Abstract**

Embodiments of this application provide a sidelink communication method and device. The method includes: A first communication device receives configuration information from a network device. The configuration information is used by the first communication device to detect consistent listen before talk LBT failures that occur in a first resource pool, the configuration information is associated with a first carrier or the first resource pool, and the first resource pool belongs to the first carrier. In addition, the first communication device sends first indication information to the network device. The first indication information indicates the first resource pool in which the consistent LBT failures occur. In this method, validity of a transmission resource of a sidelink resource pool or carrier can be ensured, and network communication reliability can be improved.

## Description

### TECHNICAL FIELD

The present invention relates to the field of wireless communication technologies, and in particular, to a sidelink communication method and device.

### BACKGROUND

With development of wireless communication technologies, a future-oriented communication system is developed, for example, a 5th generation mobile communication (5th Generation mobile communication, 5G) system or a new radio (new radio, NR) system. In the foregoing communication systems, direct communication may be performed between terminals through a sidelink (sidelink). A typical application scenario of sidelink communication is vehicle-to-everything (vehicle-to-everything, V2X). In the vehicle-to-everything, each vehicle may be understood as a terminal. The terminals can communicate with each other through a sidelink, for example, perform information transmission in a direct connection manner. This effectively reduces a communication delay.

Wireless communication is performed based on spectrum resources, and the spectrum resources may be classified into two types: a licensed spectrum (an unshared spectrum) and an unlicensed spectrum (a shared spectrum). As mobile data service volumes continuously increase, the spectrum resources become increasingly strained. Service transmission performed by using only the licensed spectrum resource cannot meet a service volume requirement. Therefore, service transmission performed on the unlicensed spectrum is considered in a long term evolution (Long Term Evolution, LTE) system, the new radio (new radio, NR) system, and the like. The unlicensed spectrum is a spectrum that can be shared by many different air interface technologies, for example, a wireless local area network that meets the Institute of Electrical and Electronics Engineers (Institute of Electrical and Electronics Engineers, IEEE) 802.11 protocol and LTE licensed spectrum assisted access (Licensed Assisted Access, LAA).

Because the unlicensed spectrum is a shared spectrum resource, to ensure that different communication devices in different air interface technologies coexist on the unlicensed spectrum, a mechanism is required to avoid mutual interference between the different communication devices. The mechanism is listen before talk (listen before talk, LBT), and may also be referred to as a channel access process. When performing communication on the unlicensed spectrum, the communication devices may perform channel contention in the unlicensed spectrum through the channel access process. If channel access succeeds, the service transmission may be performed by using the unlicensed spectrum. If the channel access fails, the service transmission cannot be performed.

However, in the foregoing solution, only a wireless communication process between the terminal and a base station is considered during LBT configuration, and a sidelink communication process between the terminals is not considered. Therefore, a technology needs to be provided to introduce an LBT design based on a sidelink communication requirement.

### SUMMARY

This application describes a sidelink communication method and device, to implement information transmission between terminals.

According to a first aspect, a sidelink communication method is provided. The method includes: A first communication device receives configuration information from a network device. The configuration information is used by the first communication device to detect consistent listen before talk LBT failures that occur in a first resource pool, the configuration information is associated with a first carrier or the first resource pool, and the first resource pool belongs to the first carrier. In addition, the first communication device sends first indication information to the network device. The first indication information indicates the first resource pool in which the consistent LBT failures occur.

That the configuration information is associated with the first carrier or the first resource pool may be understood as that the configuration may be based on a carrier granularity or a bandwidth part (bandwidth part, BWP) granularity, or may be based on a resource pool granularity. The carrier granularity may be understood as that LBT detection is independently configured by using a carrier as a granularity. The BWP granularity may be understood as that the LBT detection is independently configured by using a BWP as a granularity. The resource pool granularity may be understood as that the LBT detection is independently configured by using a resource pool as a granularity. Optionally, one carrier includes one or more BWPs, and one BWP includes one or more resource pools. When one carrier includes one BWP, the BWP granularity may be the carrier granularity.

The first communication device, for example, a first terminal, may obtain a resource pool configuration in different manners. In a first manner, the network device, for example, a base station, configures the resource pool for the first terminal through dedicated signaling or system broadcast. In a second manner, the first terminal obtains the resource pool based on a preconfiguration.

Based on the communication manner, flexible configuration of sidelink communication between terminals can be implemented, and system adaptation reliability can be improved.

It may be understood that a manner of obtaining a sidelink resource may be classified into a base station scheduling mode (Mode 1, mode 1) and a UE selection mode (Mode 2, mode 2). In the base station scheduling mode (mode 1), the base station may indicate a resource pool to which a currently scheduled resource belongs. In the UE selection mode (Mode 2), after a UE determines the sidelink resource, behavior of the UE is similar to behavior of the base station in the base station scheduling mode. However, before determining the sidelink resource, the UE needs to autonomously select a resource pool. Specifically, for Mode 2, the foregoing selection may be randomly performed, or may be performed based on a result of sensing (sensing) or partial sensing (partial sensing).

Generally, two results may be obtained when a channel access process is performed: The channel access process is completed (which is also referred to as an LBT success) and the channel access process is not completed (which is also referred to as an LBT failure). There are a plurality of time domain start locations in a time-frequency resource used for data transmission. If a channel is determined to be idle before any time domain start location, it may be considered that the channel access process is completed. If the channel is determined to be busy before all time domain start locations, it may be considered that the channel access process is not completed.

When determining that the consistent LBT failures occur on a carrier or in a resource pool on a sidelink, the first terminal may send a media access control (medium access control, MAC) control element (control element, CE) indicating the LBT failures to the network device. The MAC CE may include a plurality of resource pool identifier fields, and may further include information about a carrier to which the resource pool belongs, for example, a carrier identifier field.

In a possible implementation, the configuration information includes a maximum quantity of times of the LBT failures and a timer length. A physical (physical, PHY) entity of the first communication device indicates, to a media access control MAC entity of the first communication device, the LBT failures that occur in the first resource pool. The MAC entity starts a timer corresponding to the first resource pool, and increases a count value of a counter corresponding to the first resource pool based on the LBT failures that occur in the first resource pool. When the count value of the counter reaches the maximum, the MAC entity determines that the consistent LBT failures occur in the first resource pool.

The foregoing LBT detection can ensure that the first communication device learns of a possible LBT failure status in real time, to perform processing in a timely manner, and ensure validity of the sidelink communication.

In a possible implementation, the first communication device stops resource selection in the first resource pool within predetermined time. Alternatively, when the consistent LBT failures occur in all resource pools of the first carrier, the first communication device reselects a second carrier of the sidelink.

Optionally, the first communication device receives second indication information from a second communication device, where the second indication information indicates a second resource pool or a second carrier that is on the sidelink and in or on which the consistent LBT failures occur.

Based on the second indication information, the first communication device may determine whether to perform the sidelink communication with the second communication device based on the second resource pool or the second carrier, for example, does not use the foregoing resource within predetermined time, or changes to use another resource, to ensure reliable communication.

In a possible implementation, the first communication device sends third indication information to the network device, where the third indication indicates the second resource pool or the second carrier.

It may be understood that in a sidelink communication system, a base station may provide a same resource pool configuration for terminals served by the base station, to ensure resource configuration consistency. For example, a resource pool configuration provided by a serving base station of the first communication device for the first communication device is the same as a resource pool configuration provided by a serving base station of the second communication device for the second communication device. In this case, when the first communication device indicates, to the second communication device, the resource pool in which the consistent LBT failures occur, the second communication device can correctly understand.

In a possible implementation, the third indication information further indicates a unicast connection between the first communication device and the second communication device. The indication may enable the network device to sense a specific connection to which consistent LBT failures occur, and to perform differentiated processing accordingly, so that other unicast/broadcast/multicast sidelink communication is not affected while reliability of the unicast connection communication is ensured.

Based on the third information, the network device may not schedule the foregoing resource to the first communication device, or schedule a resource to the first communication device based on another resource pool or carrier, to ensure real-time valid communication between the first communication device and the second communication device, and improve scheduling reliability.

In a possible implementation, the first communication device selects a resource in a third resource pool or a resource on a third carrier on the sidelink, and performs unicast connection communication with the second communication device based on the resource.

The third resource pool is different from the second resource pool, or the third carrier is different from the second carrier.

In the foregoing manner, during resource selection, a case in which an identified resource on which the consistent LBT failures occur is selected for the unicast connection may be avoided. This ensures the reliable unicast connection communication between the first communication device and the second communication device.

For example, the first communication device selects a resource in another resource pool or a resource on another carrier on the sidelink, and performs the unicast connection communication with the second communication device based on the resource. The another resource pool is different from the resource pool in which the consistent LBT failures occur, or the another carrier is different from the carrier on which the consistent LBT failures occur. Alternatively, the first communication device obtains a sidelink grant resource. The grant resource is located in the resource pool in which the consistent LBT failures occur or the carrier on which the consistent LBT failures occur. Therefore, the first communication device does not use the sidelink grant resource to perform the unicast connection communication with a UE 1.

In a possible implementation, the first communication device obtains a sidelink grant resource, where the grant resource is located in the second resource pool or on the second carrier.

The first communication device does not use the grant resource to perform the unicast connection communication with the second communication device.

In a scenario in which more adaptability is considered, the first communication device determines whether each grant resource is applicable, to ensure the reliable unicast connection communication between the first communication device and the second communication device.

For example, the MAC entity of the first communication device may perform a logical channel prioritization (logical channel prioritization, LCP) process. For example, when the MAC layer of the first communication device performs the LCP process, the unicast connection between the first communication device and the second communication device is excluded. If a physical layer indicates, to the MAC entity, that a current scheduled resource belongs to another resource pool or carrier, and the another resource pool or carrier may be used for the unicast connection communication, the first communication device may determine, based on a priority, whether to use the resource to send data on the unicast connection.

In a possible implementation, the first communication device sends fourth indication information to the second communication device, where the fourth indication information indicates the first resource pool or the first carrier in or on which the consistent LBT failures occur. Therefore, a case in which the second communication device sends data to the first communication device based on a resource to which the consistent LBT failures occur may be avoided. This improves reliability.

In a possible implementation, when the sidelink includes a plurality of carriers, the first indication information further indicates a carrier to which the first resource pool belongs, to ensure accurate indication of the resource pool.

In a possible implementation, the first communication device receives a sidelink grant resource from the network device. When there is no to-be-transmitted data in a process corresponding to the grant resource, the first communication device skips or suspends LBT detection on the grant resource. Therefore, unnecessary LBT can be avoided, and power is saved.

In a possible implementation, the first communication device receives a sidelink grant resource from the network device, and the first communication device performs LBT detection on the grant resource. When there is to-be-transmitted data in a process corresponding to the grant resource, the first communication device feeds back a negative acknowledgment (negative acknowledgement, NACK) to the network device. Alternatively, when there is no to-be-transmitted data in a process corresponding to the grant resource, the first communication device feeds back an acknowledgment (acknowledgement, ACK) to the network device. Therefore, the first communication device may be enabled to indicate the NACK to the base station in a proper scenario, to ensure timely retransmission scheduling and reliable communication.

Based on the foregoing behavior of the communication device, a case in which the network device performs invalid or useless resource scheduling may be avoided. This achieves resource scheduling validity.

In a possible implementation, the communication devices are terminals, and the network device is the base station; or the network device apparatus is a central unit (central unit, CU).

According to a second aspect, a sidelink communication method is provided. The method includes: A first communication device receives first indication information from a second communication device, where the first indication information indicates a first resource pool or a first carrier that is on a sidelink and in or on which an LBT failure occurs. In addition, the first communication device sends second indication information to a network device, where the second indication information indicates the first resource pool or the first carrier.

In a possible implementation, the second indication information further indicates a unicast connection between the first communication device and the second communication device.

In a possible implementation, the first communication device selects a resource in a second resource pool or a resource on a second carrier on the sidelink, and performs unicast connection communication with the second communication device based on the resource.

The second resource pool is different from the second resource pool, or the second carrier is different from the second carrier.

In a possible implementation, the first communication device obtains a sidelink grant resource, where the grant resource is located in the first resource pool or on the first carrier. The first communication device does not use the grant resource to perform the unicast connection communication with the second communication device.

In a possible implementation, when the sidelink includes a plurality of carriers, the first indication information further indicates a carrier to which the first resource pool belongs.

In a possible implementation, the first communication device receives a sidelink grant resource from the network device. When there is no to-be-transmitted data in a process corresponding to the grant resource, the first communication device skips or suspends LBT detection on the grant resource.

In a possible implementation, the first communication device receives a sidelink grant resource from the network device. The first communication device performs LBT detection on the grant resource. When there is to-be-transmitted data in a process corresponding to the grant resource, the first communication device feeds back a NACK to the network device. Alternatively, when there is no to-be-transmitted data in a process corresponding to the grant resource, the first communication device feeds back an ACK to the network device.

In a possible implementation, the communication device is a terminal, and the network device is a base station; or the network device apparatus is a CU.

According to a third aspect, a sidelink communication method is provided. The method includes: A network device sends configuration information to a first communication device, where the configuration information is associated with a first carrier or a first resource pool, and the first resource pool belongs to the first carrier. In addition, the network device receives first indication information from the first communication device, where the first indication information indicates the first resource pool in which consistent LBT failures occur.

In a possible implementation, the configuration information includes a maximum quantity of times of the LBT failures and a timer length.

In a possible implementation, the first indication information further indicates a unicast connection between the first communication device and a second communication device.

In a possible implementation, when a sidelink includes a plurality of carriers, the first indication information further indicates a carrier to which the first resource pool belongs.

According to a fourth aspect, an apparatus used in sidelink communication is provided. The apparatus may be configured to perform operations of the communication devices in the first aspect, the second aspect, and any possible implementation of the first aspect and the second aspect. Specifically, the apparatus may include modules and units configured to perform the operations of the communication devices in any possible implementation of the first aspect or the second aspect.

According to a fifth aspect, an apparatus used in sidelink communication is provided. The apparatus may be configured to perform operations of the network device in the third aspect and any possible implementation of the third aspect. Specifically, the apparatus may include modules and units configured to perform the operations of the network device in any possible implementation of the third aspect.

According to a sixth aspect, a terminal device is provided. The terminal device includes a processor, a transceiver, and a memory. The processor, the transceiver, and the memory communicate with each other through an internal connection path. The memory is configured to store instructions, and the processor is configured to execute the instructions stored in the memory. When the processor executes the instructions stored in the memory, the execution enables the terminal device to perform any method in any possible implementation of the first aspect or the second aspect, or the execution enables the terminal device to implement the apparatus provided in the fourth aspect.

According to a seventh aspect, a network device is provided. The network device includes a processor, a transceiver, and a memory. The processor, the transceiver, and the memory communicate with each other through an internal connection path. The memory is configured to store instructions, and the processor is configured to execute the instructions stored in the memory. When the processor executes the instructions stored in the memory, the execution enables the network device to perform any method in any possible implementation of the third aspect, or the execution enables the network device to implement the apparatus provided in the fifth aspect.

According to an eighth aspect, a chip system is provided, including a memory and a processor. The memory is configured to store a computer program, and the processor is configured to invoke the computer program from the memory and run the computer program, so that a device (for example, a network device or a terminal device) onto which the chip system is installed performs any method in any one of the first aspect, the second aspect, or the third aspect and the possible implementations of the first aspect, the second aspect, or the third aspect.

According to a ninth aspect, a computer program product is provided. The computer program product includes computer program code. When the computer program code is run by a communication unit and a processing unit or by a transceiver and a processor of a device (for example, a network device or a terminal device), the communication device performs any method in any one of the first aspect, the second aspect, or the third aspect and the possible implementations of the first aspect, the second aspect, or the third aspect.

According to a tenth aspect, a computer-readable storage medium is provided. The computer-readable storage medium stores a program, and the program enables a device (for example, a network device or a communication device) to perform any method in any one of the first aspect, the second aspect, or the third aspect and the possible implementations of the first aspect, the second aspect, or the third aspect.

According to an eleventh aspect, a computer program is provided. When the computer program is executed on a computer, the computer is enabled to implement any method in any one of the first aspect, the second aspect, or the third aspect and the possible implementations of the first aspect, the second aspect, or the third aspect.

### BRIEF DESCRIPTION OF DRAWINGS

FIG. 1a is a schematic diagram of a communication system according to an embodiment of this application;
FIG. 1b is a schematic diagram of a communication system according to an embodiment of this application;
FIG. 1c is a schematic diagram of a communication system according to an embodiment of this application;
FIG. 2a is a schematic diagram of a communication system according to an embodiment of this application;
FIG. 2b is a schematic diagram of a communication system according to an embodiment of this application;
FIG. 2c is a schematic diagram of a protocol stack according to an embodiment of this application;
FIG. 3 is a schematic flowchart of a plurality of communication methods according to an embodiment of this application;
FIG. 3a is a schematic diagram of a BWP according to an embodiment of this application;
FIG. 3b is a schematic diagram of a MAC CE according to an embodiment of this application;
FIG. 3c is a schematic diagram of another MAC CE according to an embodiment of this application;
FIG. 4 is a schematic diagram of a structure of a communication apparatus according to an embodiment of this application; and
FIG. 5 is a schematic diagram of a structure of a communication apparatus according to an embodiment of this application.

### DESCRIPTION OF EMBODIMENTS

The following clearly and completely describes the technical solutions in embodiments of the present invention with reference to the accompanying drawings in embodiments of the present invention.

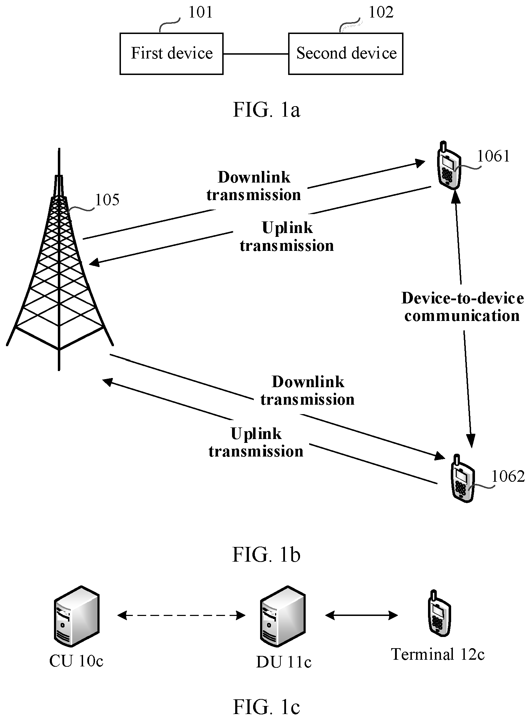

To resolve a problem in the conventional technology that transmission between terminals cannot be performed in different communication scenarios, an embodiment of the present invention provides a technical solution based on a communication system in FIG. 1a, to improve transmission validity in the communication system.

FIG. 1a is a schematic diagram of a possible system architecture to which an embodiment of this application is applicable. The system architecture shown in FIG. 1a includes a second device 101 and a first device 102. The second device in this embodiment of this application may be connected to the first device in a wireless manner. In other words, the second device may communicate with the first device through a wireless network. It should be understood that FIG. 1a is merely a schematic diagram of the communication system architecture. A quantity of first devices and a quantity of second devices in the communication system are not limited in embodiments of this application. In this embodiment, the wireless manner may be understood as sidelink communication and/or wireless link communication.

In an example, the first device and the second device in the foregoing system architecture may perform the sidelink communication. FIG. 1b is a schematic diagram of a sidelink communication scenario. As shown in FIG. 1b, in the communication scenario, a network device 105 and one or more terminal devices (for example, a terminal device 1061 and a terminal device 1062) may be included. Data transmission may be performed between the network device 105 and each of the terminal device 1061 and the terminal device 1062 through an air interface resource, and data transmission may be performed between the terminal device 1061 and the terminal device 1062 through a sidelink resource. The first device may be the terminal device 1061, and the second device may be the terminal device 1062, or vice versa. In FIG. 1b, uplink transmission is used as an example. A data channel on which uplink data transmission is performed between the network device 105 and the terminal device (the terminal device 1061 or the terminal device 1062) may be carried on a first uplink (uplink, UL) carrier or a supplementary uplink (supplementary UL, SUL) carrier. A data channel on which data transmission is performed between the terminal device 1061 and the terminal device 1062 may be carried on an SL carrier. In an example, the SL carrier may be a second UL carrier. The first UL carrier and the second UL carrier may be a same carrier.

Sidelink (sidelink, SL) communication is a technology that allows terminal devices to communicate with each other, and a resource used to carry communication of the terminal devices may be referred to as a sidelink resource. Because the sidelink communication can implement direct communication between different terminal devices, a high data rate, a low delay, and low power consumption can be implemented. The sidelink communication may include, for example, vehicle-to-vehicle (vehicle-to-vehicle), vehicle-to-infrastructure (vehicle-to-infrastructure), vehicle-to-pedestrian (vehicle-to-pedestrian), and device-to-device (device-to-device) communication. It may be understood that in both an industrial internet communication scenario and a wireless grid network communication scenario, a sidelink communication technology may be used.

As shown in FIG. 1c, the communication system includes at least a central unit (central unit, CU) 10c and a distributed unit (distributed, DU) 11c. The DU 11c communicates with a terminal 12c. For example, some functions of an NR base station are deployed on the CU, and remaining functions are deployed on the DU. In this case, there may be one or more DUs, and a plurality of DUs may share one CU. This reduces costs and facilitates network expansion. Specifically, CU-DU division may be performed based on protocol stacks. In a possible manner, at least one of the following protocol layers is deployed on the CU: a radio resource control (Radio Resource Control, RRC) layer, a service data adaptation protocol (service data adaptation protocol, SDAP) layer, and a packet data convergence protocol (Packet Data Convergence Protocol, PDCP) layer. At least one of the following remaining protocol layers is deployed on the DU: a radio link control (Radio Link Control, RLC) layer, a media access control (Media Access Control, MAC) layer, or a physical layer. The CU and the DU may be connected through an F1 interface. The CU represents a connection between the NR base station and an NR core network. A person skilled in the art may understand that the CU and the DU may be located on different physical entities or be independent of the NR base station. In other words, the CU and the DU are combined to implement functions of the NR base station or replace the NR base station.

In the foregoing network architecture, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC or PDCP layer is eventually processed as signaling at the PHY layer to be sent to the terminal device, or is converted from received signaling of the PHY layer. In this architecture, it may alternatively be considered that the signaling at the RRC layer or the PDCP layer is sent by the DU, or sent by the DU and a radio frequency apparatus.

The system architecture and the service scenario described in embodiments of the present invention are intended to describe the technical solutions in embodiments of the present invention more clearly, and do not constitute a limitation on the technical solutions provided in embodiments of the present invention. A person of ordinary skill in the art may know that: With evolution of the network architecture and emergence of new service scenarios, the technical solutions provided in embodiments of the present invention are also applicable to similar technical problems.

The technical solutions in embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) system, or the like. The technical solutions in embodiments of this application may be further applied to device-to-device (device-to-device, D2D) communication, machine-to-machine (machine-to-machine, M2M) communication, machine type communication (machine type communication, MTC), and communication in an internet of vehicles system. Communication manners in the internet of vehicles system are collectively referred to as V2X (X represents everything). For example, the V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The network device in the communication system may be any device that has a wireless transceiver function or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a donor eNB (donor eNB, DeNB), a baseband unit (baseband Unit, BBU), an access point (access point, AP), a wireless relay node, a wireless backhaul node, a transmission point (transmission point, TP), a transmission and reception point (transmission and reception point, TRP), and the like in a wireless fidelity (wireless fidelity, Wi-Fi) system. Alternatively, the device may be a gNB or a transmission point (TRP or TP) in a 5G system, for example, an NR system, may be an antenna panel or a group of antenna panels (including a plurality of antenna panels) of a base station in a 5G system, or may be a network node, for example, a baseband unit (BBU) or a distributed unit (distributed unit, DU) that constitutes a gNB or a transmission point.

In some deployments, the gNB may include the CU and the DU. The gNB may further include a radio frequency unit (radio frequency unit, RFU). The CU implements some functions of the gNB, and the DU implements some functions of the gNB. Information at the RRC layer eventually becomes information at the PHY layer, or is converted from the information at the PHY layer. Therefore, in the architecture, higher layer signaling such as RRC layer signaling or PHCP layer signaling may alternatively be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

It should be further understood that a terminal device in the communication system may also be referred to as a user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing terminal device and a chip that may be disposed in the foregoing terminal device are collectively referred to as a terminal device. For ease of understanding for this application, before the communication method provided in this application is described, concepts in this application are first briefly described.

For ease of understanding, related terms and technologies in embodiments of this application are first briefly described.

### Spread type of sidelink communication

A sidelink communication system is similar to a wireless communication system, and may also support broadcast, unicast, and multicast transmission manners. Broadcast communication is similar to a case in which a base station broadcasts system information to a terminal. For example, the base station sends data of a broadcast service to the UE without encryption, and another UE within a valid receiving range may receive the broadcast service data if the UE is interested in the broadcast service. Unicast communication is similar to data communication performed after an RRC connection is established between the UE and the base station. A unicast connection needs to be first established between two UEs. After the unicast connection is established, the two UEs may perform data communication based on a negotiated identifier. Data may or may not be encrypted. Compared with the broadcast communication, the unicast communication can be performed only between two UEs that establish the unicast connection. Multicast communication refers to communication between all UEs in a communication group, and any UE in the group can receive and send data of a multicast service.

Specifically, broadcast transmission may be referred to as broadcast sidelink signal communication, or may be referred to as sidelink communication of a broadcast service, or sidelink communication whose transmission type is broadcast. Multicast transmission may be referred to as multicast sidelink signal communication, or may be referred to as sidelink communication of a multicast service, or sidelink communication whose transmission type is multicast. The unicast communication may be referred to as unicast sidelink signal communication, or may be referred to as sidelink communication of a unicast service, or sidelink communication whose transmission type is unicast.

Based on any one of the foregoing spread types, when data transmission is performed on a sidelink, a source identifier (source ID) and a destination identifier (destination ID) need to be carried. In this embodiment, the identifiers are for a layer 2 (layer 2, L2) of a UE. Specifically, an upper layer of the UE is a PC5-S layer, and is used for communication between UEs. The upper layer may be referred to as a non-access stratum (Non-access stratum, NAS), a V2X layer, or a PC5-S layer. The layer 2 of the UE may be an AS layer, and is used for communication between a terminal and a base station. For the broadcast communication, the destination identifier corresponds to a broadcast service, and the source identifier may be understood as an identifier of a sending end UE. For the unicast communication, the destination identifier is an L2 identifier allocated by a receiving end UE to a unicast connection, and the source identifier is an L2 identifier allocated by the sending end UE to the unicast connection. For the multicast communication, the destination identifier corresponds to a group, and the source identifier may be understood as an identifier of the sending end UE.

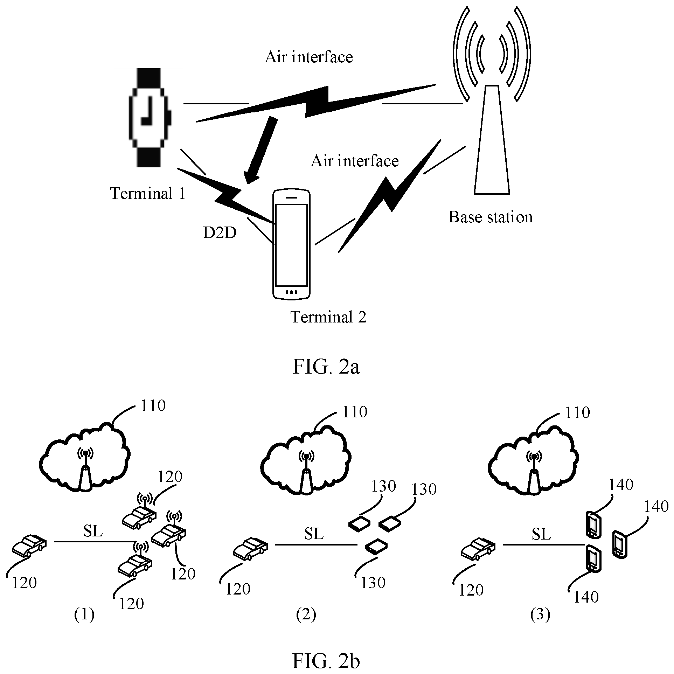

In a possible manner, as shown in FIG. 2a and FIG. 2b, data is received and sent on a D2D or V2X sidelink (sidelink, SL). The SL refers to a D2D link shown in FIG. 2a and an SL link shown in FIG. 2b. On the SL, data transmitted between terminal devices may not be forwarded by a network device. In other words, the SL may be a transmission link between the terminal devices.

As shown in FIG. 2b, a vehicle may obtain road condition information or receive an information service in a timely manner through V2V, V2I, V2P, or V2N communication. These communication manners may be collectively referred to as V2X communication. In FIG. 2b, FIG. (1), FIG. (2), and FIG. (3) are respectively schematic diagrams of V2V, V2I, and V2P communication. 110 is a network device. 120 may represent a vehicle, 130 may represent a roadside infrastructure, and 140 may represent a pedestrian. Most common V2V communication and V2I communication are used as an example. As shown in FIG. (1) in FIG. 2b, a vehicle may broadcast, to a surrounding vehicle through the V2V communication, information about the vehicle such as a vehicle speed, a driving direction, a specific position, and whether an emergency brake is stepped on. A driver of the surrounding vehicle can obtain the information, to better perceive a traffic condition outside a line of sight, to predict a dangerous condition in advance and avoid the dangerous condition. For the V2I communication shown in FIG. (2) in FIG. 2b, in addition to the foregoing exchange of security information, the roadside infrastructure, for example, a road side unit (road side unit, RSU), may provide various types of service information and data network access for a vehicle, and functions such as electronic toll collection and in-vehicle entertainment greatly improve traffic intelligence.

### Sidelink resource

The sidelink resource is a resource used for communication between terminals. The sidelink resource may include a sidelink resource in frequency domain and a sidelink resource in time domain. In addition, a sidelink in this application may also be referred to as a sidelink or a sidelink. The following describes the sidelink in a unified manner.

From the perspective of a transmission type, the sidelink resource may include a sidelink sending resource and a sidelink receiving resource. The sidelink sending resource is used to send information, for example, send control information and/or data. The sidelink receiving resource is used to receive information, for example, receive control information and/or data. A person skilled in the art may understand that the sending resource and the receiving resource may be located in a same time domain and/or frequency domain range. For example, based on a time division system, sending and receiving may share a same frequency domain resource. Based on a frequency division system, sending and receiving may share a same time domain resource.

Optionally, the sidelink signal may include control information and/or data and/or feedback information carried on a sidelink channel.

Optionally, the control information may be information used to schedule data, for example, downlink control information (downlink control information, DCI) and sidelink control information (sidelink control information, SCI) in the conventional technology. The feedback information may information for feeding back, for example, uplink control information (uplink control information, UCI) and sidelink feedback information (SFI) in the conventional technology. The control information may be carried on a control channel, for example, a PSCCH, namely, a physical sidelink control channel. The feedback information may be carried on a feedback channel, for example, a PSFCH, namely, a physical sidelink feedback channel.

Optionally, the data may be a signal in a broad sense, may be a data packet, or may be a transport block or a codeword. The data may be carried on a data channel, for example, a physical sidelink shared channel (physical sidelink shared channel, PSSCH).

### Sidelink data radio bearer

Communication in an NR sidelink network may be classified based on service flows. For example, an IP flow or an Ethernet flow may be understood as corresponding to different services. The foregoing service flows are classified into different quality of service (quality of service, QoS) flows based on different QoS parameters or features. Specifically, a base station may map the QoS flow to a sidelink data radio bearer (data radio bearer, DRB), or define a mapping relationship between the QoS flow and the sidelink DRB. For example, the base station maps different QoS flows to different sidelink DRBs, or maps QoS flows with similar parameters to a same sidelink DRB. A terminal may establish a sidelink DRB based on the mapping relationship, and send a corresponding QoS flow to another terminal through the sidelink DRB. The sidelink DRB is a DRB used to transmit data between the terminals. Optionally, the terminal may alternatively determine the mapping relationship based on a preconfiguration, and establish the sidelink DRB.

### Sidelink logical channel

Data may be classified based on different types of transmission services of a terminal, and correspond to different logical channels. Correspondingly, logical channel information may be a logical channel (logic channel, LCH) identifier and/or a logical channel group (logic channel group, LCG) identifier. A person skilled in the art may understand that any identifier used to identify the logical channel or the logical channel group falls within the protection scope of the present invention. The LCG may include at least one LCH. For example, four LCHs or eight LCHs each may form one LCG. A difference is that data volumes of LCGs formed by LCHs of different quantities are different. Generally, resource types corresponding to different LCHs may be the same or different, resource types corresponding to different LCHs in one LCG may be the same or different, and one LCH may correspond to at least one resource type. For another example, a priority sequence of different LCHs/LCGs may be determined by a feature of data carried in the LCHs/LCGs. The priority sequence of the LCHs/LCGs may be understood as a sequence in which the terminal sends data to the base station. For example, the priority sequence of the LCHs/LCGs may be determined based on any one or more of the following cases:
strictness of delay requirements of data;
data volume;
waiting time of the data in a buffer; or
data type.

Alternatively, a priority of the LCG may be associated with an LCH in the LCG. For example, the LCG includes an LCH 1 and an LCH 2, and a priority of the LCG 1 is higher than a priority of the LCG 2. In this case, for the priority of the LCG, reference may be made to the priority of the LCG 1, or the priority of the LCG is the same as the priority of the LCG 1.

It should be noted that in embodiments of this application, terms "network" and "system" are usually interchangeably used, but meanings of the terms may be understood by a person skilled in the art. Terms "component carrier", "carrier unit", and "carrier" are usually interchangeably used, but a person skilled in the art can understand meanings of the terms. "Information (information)", "signal (signal)", "message (message)", and "channel (channel)" may be interchangeably used sometimes. It should be noted that meanings expressed by the terms are consistent when differences of the terms are not emphasized. Terms "of (of)" and "corresponding (corresponding, relevant)" may be interchangeably used sometimes. It should be noted that meanings expressed by the terms are consistent when differences of the terms are not emphasized.

It should be further noted that in embodiments of this application, "identifier (identifier, ID)" and "index (index)" are usually interchangeably used, but a person skilled in the art can understand meanings of the terms. It should be noted that meanings expressed by the terms are consistent when differences of the terms are not emphasized.

It should be further noted that in embodiments of this application, "at least one" may mean "one or more". For example, that at least one of manner A, manner B, or manner C is used for implementation means that manner A may be used for implementation, manner B may be used for implementation, or manner C may be used for implementation; or may mean that manner A and manner B may be used for implementation, manner B and manner C may be used for implementation, or manner A and manner C may be used for implementation; or may mean that manner A, manner B, and manner C may be used for implementation. Similarly, "at least two" may mean "two or more".

It should be further noted that in embodiments below, "first", "second", "third", and the like are intended to distinguish between different objects, but should not constitute any limitation on this application.

It should be further noted that the term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one", similar to "A and/or B", describes an association relationship between associated objects and represents that three relationships may exist. For example, at least one of A and B may represent the following three cases: Only A exists, both A and B exist, and only B exists. The technical solutions provided in this application are described in detail below with reference to the accompanying drawings.

In embodiments of this application, a V2X system is used as an example. Regardless of broadcast, unicast, or multicast, if terminals in a coverage area of a sidelink need to normally communicate with each other, an LBT process generally needs to be first performed, to find an available or idle sidelink resource in an available or idle unlicensed spectrum, to perform information transmission.

A manner of obtaining the sidelink resource may be classified into a base station scheduling mode (Mode 1, mode 1) and a UE selection mode (Mode 2, mode 2).

In the base station scheduling mode (Mode 1), a base station may indicate a resource pool to which a currently scheduled resource belongs. Specifically, the base station may schedule a resource for a UE by using DCI, or allocate a sidelink configured grant (configured grant) to the UE by using an RRC message.

In the UE selection mode (Mode 2), after a UE determines the sidelink resource, behavior of the UE is similar to behavior of the base station in the base station scheduling mode. However, before determining the sidelink resource, the UE needs to autonomously select a resource pool. One possibility is that the UE performs selection. In other words, the UE autonomously determines to select a specific resource pool. For example, the UE receives a resource pool configuration from the base station, or obtains the resource pool configuration from a preconfiguration, and then selects a resource from the resource pool to perform sidelink communication.

Specifically, the foregoing selection may be randomly performed, or may be performed based on a result of sensing (sensing) or partial sensing (partial sensing). The sensing may also be understood as full sensing (full sensing). The terminal is required to continuously sense a sidelink channel, for example, a physical sidelink control channel (physical sidelink control channel, PSCCH) on a sidelink, or SCI, to determine available resources. Compared with the full sensing, the partial sensing, as the name indicates, requires the terminal to sense only some time domain resources to determine the available resources. The partial sensing saves more power than the full sensing. For random selection in some resource pools, the sensing or the partial sensing may not be performed, and the available resources are randomly selected. It may be understood that the time domain resource may be a time unit, for example, a frame, a subframe, a slot, a symbol, or the like, on the sidelink. This is not limited in the present invention.

Generally, LBT is performed by using a channel (for example, 20 MHz) as a granularity. Before sending a signal (for example, a data signal) on a channel (for example, denoted as a first channel), a communication device may first detect whether the first channel is idle, for example, detect whether a nearby communication device is occupying the first channel to send a signal. The detection process may be referred to as a clear channel assessment (clear channel assessment, CCA) process or a channel access process.

Specifically, two types of channel access processes exist, and are denoted as a first-type channel access process and a second-type channel access process.

The first-type channel access process (which may also be referred to as a fixed duration-based channel access process):

In fixed duration-based energy detection, for a specific bandwidth (for example, 20 megahertz or 20 MHz), if signal energy received by a communication device (which may be a terminal, or may be a network device) within fixed duration is less than or equal to a first preset threshold, it is considered that the channel is idle, so that the communication device may use the idle channel to transmit data. Otherwise, it is considered that the channel is busy, so that the communication device does not use the busy channel to transmit data.

Alternatively, in the fixed duration-based channel access process, a communication device detects fixed duration. If signal energy detected in the channel is less than a preset threshold within the fixed duration, it is considered that the channel is in an idle state, and the channel may be occupied. Otherwise, channel contention needs to be performed again.

The second-type channel access process (which may also be referred to as a rollback-based channel access process):
In rollback mechanism-based energy detection, a window is defined for a specific bandwidth, and the window defines a range of a quantity of slots to be detected. A communication device randomly selects a value A from the window (or a value range). After detecting at least A slots on which idle energy detection is performed, the communication device considers that a channel is idle, so that the communication device may use the channel to transmit data. Otherwise, it is considered that the channel is busy, so that the communication device does not use the busy channel to transmit data. The idle energy detection means that signal energy received in fixed duration is less than or equal to a second preset threshold. The first preset threshold and the second preset threshold may be predefined, for example, predefined in a protocol. This is not limited. In addition, there is no limitation relationship between the first preset threshold and the second preset threshold, and the first preset threshold and the second preset threshold may be the same or may be different.

Specifically, the communication device randomly selects the value A in a contention window. After detecting at least A idle slots, the communication device may determine that the channel is in an idle state, so that the channel may be occupied. Otherwise, channel contention needs to be performed again. The idle slot means that signal energy detected in the channel in one slot is less than the preset threshold. In this type of channel access process, four channel access priority classes (channel access priority classes, CAPCs) are introduced. Different CAPCs correspond to different channel access parameters. The channel access parameters include a size of a contention window, a corresponding service status, channel occupancy time (channel occupancy time, COT) information, and the like. The COT is duration for which a channel can be used after a channel access process succeeds.

Two results may be obtained when the channel access process is performed: The channel access process is completed (which is also referred to as an LBT success) and the channel access process is not completed (which is also referred to as an LBT failure). There are a plurality of time domain start locations in a time-frequency resource used for data transmission. If a channel is determined to be idle before any time domain start location, it may be considered that the channel access process is completed. If the channel is determined to be busy before all time domain start locations, it may be considered that the channel access process is not completed.

A difference lies in that in a licensed spectrum-based operation scenario, after obtaining a scheduled resource, the UE may directly use the resource to perform service transmission. However, in an unlicensed spectrum-based operation scenario, after obtaining the scheduled resource, the UE further needs to perform LBT on the resource, and needs to use the resource to perform service transmission after the LBT succeeds.

In embodiments of the present invention, an unlicensed spectrum is applied in sidelink communication to perform a valid LBT process on a sidelink, so that sidelink communication reliability is achieved, and communication efficiency between terminals is improved. The following provides detailed descriptions.

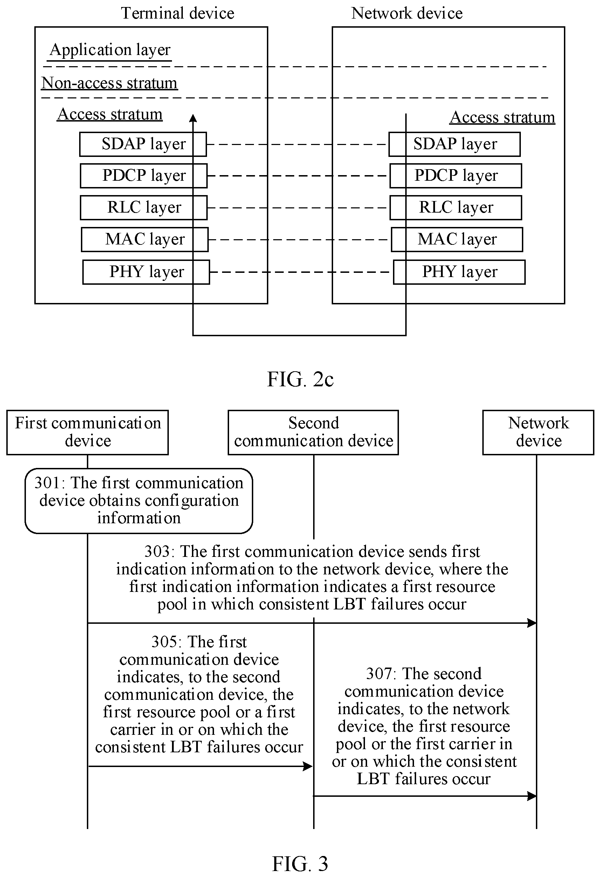

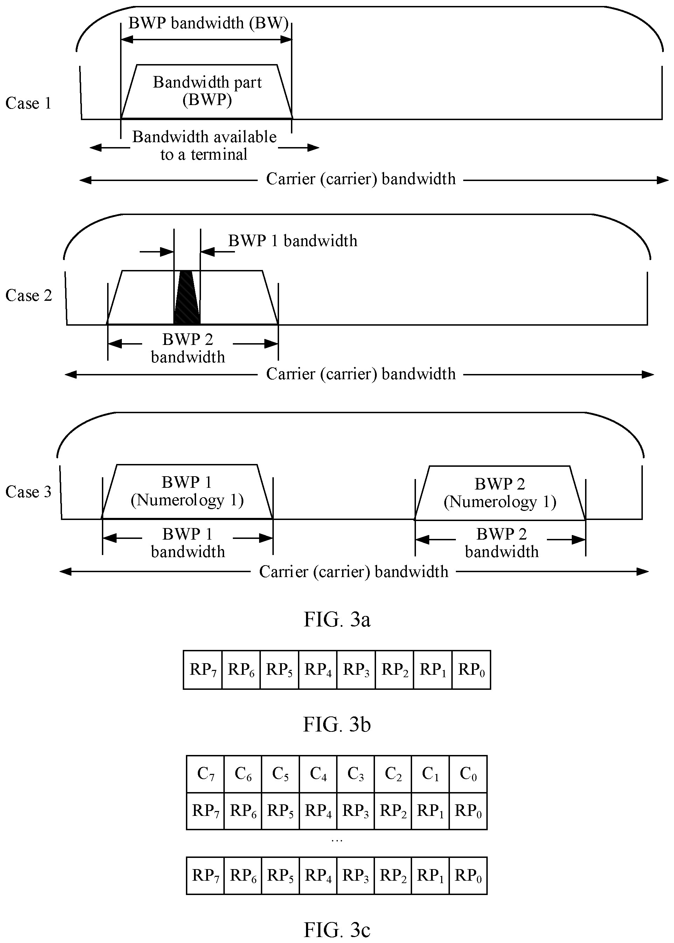

FIG. 3 is a schematic flowchart of a communication method according to this application. In a sidelink scenario, a communication device is used as a terminal, and a network device is used as a base station for description. The communication device and the network device each may be a chip, or may be implemented by a chip. This is not limited in embodiments of this application. For ease of description, the communication device described below may also be referred to as the terminal or a UE.

The method includes the following steps.

301: A first communication device obtains configuration information. The configuration information is used by the first communication device to detect consistent listen before talk LBT failures that occur in a first resource pool, the configuration information is associated with a first carrier or the first resource pool, and the first resource pool belongs to the first carrier.

303: The first communication device sends first indication information to the network device. The first indication information indicates the first resource pool in which the consistent LBT failures occur.

Generally, a bandwidth of a carrier in NR is wider than a bandwidth of a carrier in LTE. For example, the bandwidth of the carrier in the NR may be 100 MHz. However, different terminals have different radio frequency capabilities, and can support different maximum bandwidths. Therefore, a concept of a bandwidth part (bandwidth part, BWP) is introduced. FIG. 3a is a schematic diagram of a BWP. The BWP is a group of continuous RB resources on a carrier. Different BWPs may occupy frequency domain resources that partially overlap but have different bandwidths, or may be bandwidth resources that have different numerologies and that may not overlap in frequency domain. An example in which a maximum of four BWPs can be configured for one terminal device is used for description. For example, four BWPs are configured in frequency division duplex (frequency division duplex, FDD), or four BWPs are configured in time division duplex (time division duplex, TDD). One BWP can be simultaneously activated on each carrier, and data may be sent and received between terminals on the activated BWP based on a sidelink.

In this embodiment of this application, the network device may configure the BWPs for the terminal on an unlicensed spectrum, and activate one of the configured BWPs. The terminals may perform sidelink communication with each other by using the unlicensed spectrum. That the configuration information is associated with the first carrier or the first resource pool may also be understood as that the configuration may be based on a carrier granularity or a BWP granularity, or may be based on a resource pool granularity. The carrier granularity may be understood as that LBT detection is independently configured by using a carrier as a granularity. The BWP granularity may be understood as that the LBT detection is independently configured by using a BWP as a granularity. The resource pool granularity may be understood as that the LBT detection is independently configured by using a resource pool as a granularity. Optionally, one carrier includes one or more BWPs, and one BWP includes one or more resource pools. When one carrier includes one BWP, the BWP granularity may be the carrier granularity. Therefore, the resource pool granularity may enable flexible configuration of a network, and the carrier granularity or the BWP granularity may reduce signaling overheads.

In 301, the first terminal may obtain a resource pool configuration in different manners. In a first manner, the network device, for example, the base station, configures the resource pool for the first terminal through dedicated signaling or system broadcast. In a second manner, the first terminal obtains the resource pool based on a preconfiguration. The preconfiguration may be pre-stored in the terminal or in a subscriber identity module (Subscriber Identity Module, SIM) card, or the terminal device receives the configuration from a core network. The SIM card may also be referred to as a telephone card, or a smart card mainly used to store information such as subscriber identity data, SMS data, and a phone number.

In the first manner, the network device configures the resource pool. This corresponds to Mode 1. In the second manner, the first terminal configures the resource pool. This corresponds to Mode 2. In other words, in the first manner, the resource pool configuration is provided by the network device for the first terminal, to ensure that a network access terminal can obtain a valid resource pool configuration and perform sidelink communication based on the resource pool configuration. In the second manner, the resource pool configuration is preconfigured in the first terminal or in the SIM card, to ensure that the first terminal can perform sidelink communication based on the preconfigured resource pool when there is no network coverage.

In the first manner, the configuration information received by the first terminal sent by the base station may be sent by the base station to the UE through broadcast or RRC dedicated signaling. For example, when the UE is in an idle state or an inactive state, the base station sends the configuration information to the UE through a broadcast message. When the UE is in a connected state, the base station sends the configuration information to the UE through the RRC dedicated signaling.

For example, an access network device or the base station sends system information or RRC common information to the terminal. The system information or the RRC common information may be a cell-level parameter. A resource pool may be configured for the terminal through system information configuration or RRC common information configuration. During specific implementation, the access network device may send the system information or the RRC common information to the terminal, and the system information or the RRC common information is used to configure the resource pool for each terminal. Because the system information or the RRC common information is sent to the terminal, the configuration information sent by using the system information or the RRC common information may be used for multicast transmission between the terminals. For example, a sending end UE may multicast data and/or control information by using a sidelink resource configured by using the system information or the RRC common information, and another terminal, for example, a receiving end UE, may receive the data or the control information in a corresponding sidelink resource pool.

For another example, an access network device or the base station sends RRC dedicated information to the terminal. The RRC dedicated information may be a terminal-level parameter (or referred to as a UE-level parameter) used to perform parameter configuration on the terminal. In a configuration manner of the RRC dedicated information, a resource pool may be configured for a single terminal. During specific implementation, the access network device may send the RRC dedicated information to the single terminal, and the RRC dedicated information is used to configure the resource pool for the terminal. Because the RRC dedicated information is sent to the single terminal, the configuration information sent by using the RRC dedicated information may be used for unicast transmission between the terminals. For example, a terminal 1 may send data or control information to a terminal 2 in a unicast manner by using the configuration information sent by using the RRC dedicated information.

Alternatively, an operator preconfigures a sidelink resource pool for the terminal, or preconfigures the sidelink resource pool for the terminal in a predefined manner in a standard protocol. In a preconfiguration manner, the resource pool configuration may be performed on one or more terminals. During specific implementation, a core network device (for example, a policy control function Policy Control Function network element, PCF network element) may separately send preconfiguration information to each terminal, and the preconfiguration information is used to separately perform the resource pool configuration on each terminal. Because the preconfiguration information is sent to a plurality of terminals, the preconfiguration information may be used for broadcast transmission between the terminals. For example, a terminal 1 may broadcast data and/or control information by using the preconfiguration information, and another terminal, for example, a terminal 2 may receive the data and/or control the information based on the preconfiguration information.

In actual application, the system information, the RRC common information, the RRC dedicated information, or the preconfiguration information may all be used for broadcast, multicast, and/or unicast information transmission. This is not limited in this application.

As shown in FIG. 2c, a sidelink communication-based protocol stack of a terminal includes at least one of the following protocol layers (or entities): a sidelink service data adaptation (Service Data Adaptation Protocol, SDAP) layer, a sidelink packet data convergence protocol (PDCP, Packet Data Convergence Protocol) layer, a sidelink radio link control (RLC, Radio Link Control) layer, a sidelink media access control (MAC, Media Access Control) layer, and a sidelink physical (PHY, Physical) layer.

The SL PDCP layer is mainly used to compress and decompress/encrypt and decrypt information. The SL RLC layer is mainly used to implement a function related to an automatic repeat request (ARQ, Automatic Repeat Request), and segment and concatenate information or reassemble segmented and concatenated information. The SL MAC layer is mainly used to select a transmission format combination and implement functions related to scheduling and a hybrid automatic repeat request (HARQ, Hybrid Automatic Repeat Request). The SL PHY layer is mainly used to provide an information transmission service to the MAC layer and an upper layer, and perform coding and modulation or demodulation and decoding based on the selected transmission format combination. Therefore, in this embodiment of the present invention, the protocol stack of the terminal may be aggregated at any protocol layer in the PDCP layer, the RLC layer, or the MAC layer. For example, the protocol stack may be aggregated at the PDCP layer, so that reliability of information transmission can be improved through encryption and decryption. The foregoing adaptation layer is used to perform conversion on data between a base station and the protocol stack of the terminal. By setting the adaptation layer, conversion between the protocol stacks can be ensured, so that configuration of the protocol stack in the base station is more flexible.

Generally, the configuration information in 301 may include a maximum quantity of times of the LBT failures and a timer length.

Specifically, configuration information based on a sidelink carrier may mean that one carrier corresponds to or has one configuration. Therefore, all resource pools in the carrier may be used based on the same configuration to recover the consistent LBT failures. Alternatively, configuration information based on a sidelink resource pool may mean that one resource pool corresponds to or has one configuration. If the LBT failure occurs, a physical PHY entity of the first communication device indicates, to a media access control MAC entity of the first communication device, the LBT failure that occurs in the first resource pool. The MAC entity starts or restarts a timer corresponding to the first resource pool, and increases a count value of a counter corresponding to the first resource pool based on the LBT failures that occur in the first resource pool. When the count value of the counter reaches the maximum, the MAC entity determines that the consistent LBT failures occur in the first resource pool. Optionally, the physical layer of the first communication device performs LBT detection on each sidelink grant resource in the first resource pool.

For example, a granularity is a BWP (where when one carrier has one BWP, a BWP granularity may be understood as a carrier granularity). When performing the LBT detection in the BWP and determining that each time an LBT failure occurs in the BWP, the first terminal may perform the following operations:
1. The first terminal increases a count value of a counter (which may be referred to as LBT_FAIL_COUNTER) of the BWP by 1, where an initial value of the counter is 0.
2. The first terminal starts or restarts a timer (which may be referred to as lbtFailureDetectionTimer) of the BWP, where timing duration of the timer may be duration configured by the first terminal or the base station.

Before the timer expires, if the count value of the counter reaches a threshold, the first terminal may determine that consistent uplink LBT failures (consistent uplink LBT failures) occur in the BWP. When the timer expires, the terminal may reset the count value of the counter to 0. The counter and the timer are a counter and a timer that correspond to the BWP or the carrier.

There is a similar design in a case in which the granularity is a resource pool. A difference lies in that the first terminal performs the operations on the counter and the timer on each resource pool, and determines whether the consistent LBT failures occur in the resource pool.

It may be understood that regardless of whether the configuration information is associated with the carrier/BWP or the resource pool, the first terminal may maintain the timer and the counter at a resource pool granularity to detect the consistent LBT failures. In other words, the first terminal separately maintains the timer and the counter for different resource pools. Alternatively, the configuration information is associated with the carrier, and the first terminal may maintain the timer and the counter at a carrier granularity to detect the consistent LBT failures. In other words, the first terminal separately maintains the timer and the counter for different carriers.

In this embodiment of the present invention, 303 is mainly for a case in which an RRC status of the first terminal is in a connected (connected) state. In other words, when the first terminal is in the connected state, the first terminal may indicate, to the base station, the resource pool that the consistent LBT failures occur. When the first terminal is in an idle (idle) state or an inactive (inactive) state, the first terminal may skip performing the indication on the base station or skip performing 303. It may be understood that the first terminal in the connected state reports a MAC CE to the base station to enable the base station to sense, so that the base station may update the resource pool configuration or an LBT-related configuration of the resource pool. On the contrary, the first terminal in the idle or inactive state does not communicate with the base station. Therefore, this step may be skipped.

When determining that the consistent LBT failures occur on the carrier or in the resource pool on a sidelink, the first terminal may send a media access control (medium access control, MAC) control element (control element, CE) indicating the LBT failures to the network device, to quickly indicate the LBT failures to the network device. Details are described below.

For example, the MAC CE shown in FIG. 3b includes a plurality of resource pool identifier fields, including eight resource pool identifier fields: RP₀ to RP₇. When a value of a bit corresponding to a resource pool identifier field is a first value, it indicates that the consistent LBT failures occur on a terminal in a resource pool corresponding to the resource pool identifier field. When a value of a bit corresponding to a resource pool identifier field is a second value, it indicates that no consistent LBT failure occurs on a terminal in a resource pool corresponding to the resource pool identifier field. Specific values of the first value and the second value are not limited. For example, the first value is 1, and the second value is 0.

In consideration of a scenario in which a plurality of sidelink carriers are supported, the first terminal may further include, in the MAC CE, information about a carrier to which the resource pool belongs. As shown in FIG. 3c, the MAC CE may include a carrier identifier field. For example, eight carriers are respectively represented as C₀ to C₇, and each Cᵢ field in the figure corresponds to one carrier. When the Cᵢ field corresponding to the first carrier is a first value, it indicates that eight resource pool identifier fields corresponding to the first carrier may be further identified in the MAC CE. When the Cᵢ field corresponding to the first carrier is a second value, it indicates that the eight resource pool identifier fields corresponding to the first carrier may not be identified in the MAC CE. In actual application, a carrier field may alternatively be indicated in another manner. This is not limited in embodiments of this application. The carrier identifier field indicates whether the consistent LBT failures occur on the terminal on the carrier. Similarly, when a value of a bit corresponding to the carrier identifier field is a first value, it indicates that the consistent LBT failures occur on the terminal on the carrier. When a value of a bit corresponding to the carrier identifier field is a second value, it indicates that no consistent LBT failure occurs on the terminal in the carrier. Specific values of the first value and the second value are not limited. For example, the first value is 1, and the second value is 0.

When the first terminal is in the connected mode and the consistent LBT failures occur in the resource pool, the first terminal generates a MAC CE to indicate, to the base station, information about the resource pool in which the consistent LBT failures occur. For example, the MAC CE includes indication information of the resource pool in which the consistent LBT failures occur, and the indication information may be a resource pool index or a resource pool identifier.

Generally, the MAC CE may correspond to one logical channel identifier (LCH ID). For example, the LCH ID is used to identify the MAC CE, and the LCH ID is in a one-to-one correspondence with the MAC CE. Optionally, the base station may configure a scheduling request (scheduling request, SR) resource for the MAC CE, to request an air interface (a Uu interface) resource from the base station for the MAC CE.

It may be understood that the first terminal may stop performing resource selection in the resource pool in predetermined time; or when the consistent LBT failures occur in all resource pools of the carrier, the first terminal may reselect another carrier on the sidelink.

The following describes, in different modes, behavior of the first terminal or the base station after the consistent LBT failures occur.

### 1. The first terminal is in Mode 1:

After the terminal reports the MAC CE to indicate, to the base station, the information about the resource pool in which the consistent LBT failures occur, the base station does not schedule a resource in the resource pool for the terminal within first predetermined time.

Further, after the predetermined time, the base station may reschedule the resource in the resource pool for the terminal. If the LBT failure occurs again, the base station does not schedule the resource in the resource pool for the terminal within second predetermined time. The second predetermined time is not shorter than the first predetermined time.

Optionally, the foregoing mechanism may be further applied to another resource pool whose time domain and/or frequency domain resources overlap with the resource pool. In other words, if time domain or frequency domain resources in different resource pools overlap, and the consistent LBT failures occur in at least one of such resource pools, the base station may not schedule any resource in such resource pools within the predetermined time.

The foregoing behavior can avoid unreliable communication caused by frequent attempts of the base station. In addition, same processing is performed on resource pools whose frequency domain locations overlap, so that reliability can be improved.

### 2. The first terminal is in Mode 2:

The first terminal in the connected state reports the MAC CE to the base station.

Regardless of whether the MAC CE is reported, the first terminal may continue to attempt to select a resource in the resource pool in which the consistent LBT failures occur, and perform LBT to determine whether the resource is available. Alternatively, the first terminal may perform an operation in at least one of the following manners, to avoid selecting some resources:
Manner 1: A resource is no longer selected from the resource pool in which the consistent LBT failures occur.
Manner 2: A resource is no longer selected from the resource pool within the predetermined time. Duration of the predetermined time may be configured by the base station, or may be determined by the terminal.
Manner 3: Before the base station reconfigures the resource pool, a resource is no longer selected from the resource pool. Reconfiguration of the resource pool may be LBT reconfiguration of the resource pool.

Therefore, in the foregoing manners, reliability of sidelink communication between the first communication device and another communication device (for example, the second communication device) can be ensured.

In this embodiment of the present invention, Manner 1 or Manner 2 may be applicable to a terminal in a non-connected state, and Manner 3 is applicable to a terminal in a connected state.

Further, in consideration of a multi-carrier scenario, the MAC CE may further carry information about a carrier corresponding to the resource pool.

Optionally, the first terminal may alternatively send indication information by using RRC to a base station that provides a service for the first terminal.

Further, when the consistent LBT failures occur in all resource pools on a specific carrier, if there is another carrier, the first terminal may perform carrier reselection, to select the another carrier for service transmission. If the consistent LBT failures occur on all carriers (for example, the consistent LBT failures occur in all resource pools on all carriers), the first terminal may send indication information to an upper layer (for example, a PC5-S layer, a V2X layer, or an application layer) of the first terminal, to indicate that a PC5 interface is unavailable. Correspondingly, the application layer may perform service transmission by using an air interface (a Uu interface).

In this embodiment, the terminal may be enabled to perform LBT failure processing based on the resource pool, and the base station is indicated or the behavior of the terminal is limited to ensure the sidelink communication reliability.

For the second manner, that is, a case in which the first terminal obtains the configuration information based on a preconfiguration, the following describes in detail interaction between terminals. As shown in FIG. 3, for example, a serving base station of a UE 1 is a BS 1, and a unicast connection is used for communication between a UE 2 and the UE 1. The UE 2 is in an idle state, an inactive state, or a connected state. If the UE 2 is in the connected state, a serving base station corresponding to the UE 2 is a BS 2. In this embodiment, the BS 2 and the BS 1 may be a same base station.

After the UE 1 determines that the consistent LBT failures occur in the first resource pool, this embodiment may further include the following steps:
305: The UE 1 indicates, to the UE 2, the first resource pool or the first carrier in or on which the consistent LBT failures occur.
307: The UE 2 indicates, to the BS 2, the first resource pool or the first carrier in or on which the consistent LBT failures occur.

The foregoing signaling interaction between the terminals in the unicast connection can improve reliability and validity of communication between the terminals.

It may be understood that for the unicast connection communication scenario, the UE 1 may skip 303. In other words, the UE 1 does not need to indicate, to the BS 1, the resource pool in which the consistent LBT failures occur. For example, after performing 301, the UE 1 skips 303, and directly performs 305. Alternatively, the UE 1 and the UE 2 in 305 or 307 may be interchanged. For example, the UE 1 may receive the resource pool or the carrier that is indicated by the UE 2 and in or on which the consistent LBT failures occur, and then transmit the indication information to the BS 1. In this manner, for a same UE 1, the UE 1 may not only detect the resource pool or the carrier in or on which the consistent LBT failures occur, but also obtain, from the peer UE 2, another resource pool or carrier in or on which the consistent LBT failures occur, to ensure reliability of sidelink communication between the UE 1 and the UE 2.

If the UE 1 transmits a service to the UE 2 by using the resource pool in which the consistent LBT failures occur, the UE 2 may fail to receive the service or suffer a reception failure. Therefore, the UE 1 indicates a configuration of the resource pool to the UE 2, and the UE 2 can determine, based on resource pool information indicated by the UE 1, the resource pool in which the consistent LBT failures occur, and then map the resource pool to a resource pool obtained by the UE 2 from the base station or from a preconfiguration. For example, the mapping may mean that the UE 2 obtains indication information (a resource pool identifier or a resource pool index) of the resource pool from the UE 1, and the UE 2 determines a time-frequency domain resource of the resource pool based on the indication information. The time-frequency domain resource may be configured by the base station for the UE 2 or may be obtained by the UE 2 based on the preconfiguration.

Optionally, each base station in a sidelink communication system may provide a same resource pool configuration for a UE served by the base station, to ensure resource configuration consistency. For example, a resource pool configuration provided by the serving base station BS 1 of the UE 1 for the UE 1 is the same as a resource pool configuration provided by the serving base station BS 2 of the UE 2 for the UE 2. In this case, when the UE 1 indicates, to the UE 2, the resource pool in which the consistent LBT failures occur, the UE 2 can correctly understand. Alternatively, a same base station provides services for the UE 1 and the UE 2. In this scenario, the base station may provide a same resource pool configuration for different UEs.

After receiving the indication information sent by the UE 1 and indicating the resource pool or the carrier in or on which the consistent LBT failures occur, the UE 2 in the connected state may further send the indication information to the serving base station BS 2 of the UE 2, so that when subsequently scheduling a resource for the UE 2, the BS 2 may avoid the resource pool or carrier in or on which the consistent LBT failures occur.

Specifically, the UE 2 may send the indication information to the BS 2 by using a MAC CE. The MAC CE may be the same as or different from a MAC CE used by the UE 2 when the UE 2 detects the resource pool in which the consistent LBT failures occur. If the MAC CEs are the same, the MAC CE may further include indication information that indicates whether the consistent LBT failures are detected by the UE 2 or detected by the peer UE. Optionally, the MAC CE may further include or indicate the unicast connection between the UE 1 and the UE 2. Therefore, the base station may be enabled to perform corresponding processing for different scenarios.

Further, in consideration of a multi-carrier scenario, the MAC CE may further carry information about a carrier corresponding to the resource pool.

Optionally, the UE 2 may alternatively send the indication information to the BS 2 by using RRC.

Generally, the UE 2 in the idle state or the inactive state may skip 307 or may not perform 307. For an operation solution in which the UE 2 determines to avoid some resources, refer to the foregoing related descriptions of the first terminal. For example, after receiving the indication information of the UE 1, when selecting a sidelink resource for the unicast connection, the UE 2 does not select or avoids a resource in the resource pool in which the consistent LBT failures occur, or does not select a resource in the resource pool within a period of time.

In a possible case, if the UE 1 is reconfigured by the BS 1, or the UE 1 starts to use the resource in the resource pool again for communication, if the consistent LBT failures are not identified, or the consistent LBT failures are not identified within a period of time, the UE 1 may send indication information to the UE 2, where the indication information indicates that the resource pool is available. In another possible case, if the UE 2 receives service transmission or data from the UE 1 in the resource pool, when selecting the sidelink resource for the unicast connection, the UE 2 reselects the resource in the resource pool.

It should be noted that the foregoing uses the resource pool in which the consistent LBT failures occur as an example to describe interaction between the UEs and behavior of the UE 2 after the UE 2 receives an indication of the UE 1. Optionally, in the foregoing process, sidelink carrier information may be exchanged, but sidelink resource pool information is not exchanged. For example, the UE 1 indicates, to UE 2, information about a carrier on which the consistent LBT failures occur, and the UE 2 indicates, to the serving base station BS 2, the information about the carrier on which the consistent LBT failures occur. Optionally, interaction between the terminals may include corresponding sidelink unicast connection information. In a scenario in which resource pool configurations may be inconsistent, the interaction may be performed at a carrier granularity, to ensure communication reliability, and further reduce signaling overheads.

If only the information about the carrier on which the consistent LBT failures occur is provided, for a condition for the terminal or the base station to determine that the consistent LBT failures occur on the carrier, refer to the foregoing descriptions. For example, the consistent LBT failures occur on all resource pools on the carrier on the sidelink, and are not recovered. However, embodiments of the present invention are not limited thereto.

The following describes two implementations of behavior of the UE 2 after the UE 2 obtains the indication information of the UE 1. For example, the UE 2 performs resource pool selection or reselection to ensure communication reliability.

### Manner 1:

The UE 2 selects a resource in another resource pool or a resource on another carrier on the sidelink, and performs unicast connection communication with the UE 1 based on the resource. The another resource pool is different from the resource pool in which the consistent LBT failures occur, or the another carrier is different from the carrier on which the consistent LBT failures occur.

### Manner 2:

The UE 2 obtains a sidelink grant resource. The grant resource is located in the resource pool or the carrier in or on which the consistent LBT failures occur. In this case, the UE 2 does not use the sidelink grant resource to perform unicast connection communication with the UE 1.

For example, the UE 2 selects a resource in another resource pool or a resource on another carrier on the sidelink, and performs the unicast connection communication with the UE 2 based on the resource. The another resource pool is different from the resource pool or the carrier in or on which the consistent LBT failures occur. Alternatively, the UE 2 obtains a sidelink grant resource. The grant resource is located in the resource pool or the carrier in or on which the consistent LBT failures occur. The UE 2 does not use the sidelink grant resource to perform unicast connection communication with the UE 1.

Specifically, if it is determined that a current scheduled resource is a resource in the resource pool or the carrier in or on which the consistent LBT failures occur and that is indicated by the UE 1, when selecting to-be-transmitted data for the resource, the UE 2 excludes the unicast connection to the UE 1. For example, a physical layer of the UE 2 indicates, to a MAC entity of the UE 2, that the current scheduled resource belongs to the resource pool or the carrier in or on which the consistent LBT failures occur. In this embodiment of the present invention, the MAC entity of the UE 2 may perform a logical channel prioritization (logical channel prioritization, LCP) process. For example, when the MAC layer of the UE 2 performs the LCP process, the unicast connection between the UE 2 and the UE 1 is excluded. If the physical layer indicates, to the MAC entity, that the current scheduled resource belongs to another resource pool or carrier, and the another resource pool or carrier may be used for the unicast connection communication, it may be determined, based on a priority, whether to use the resource to send data on the unicast connection.

The UE 2 may select a resource of another resource pool or carrier in or on which no consistent LBT failure occurs, and the MAC layer of the UE 2 converts the data on the unicast connection corresponding to the resource pool or carrier into a MAC packet data unit (packet data unit, PDU), and sends information through a PC5 interface by using the corresponding resource.

In conclusion, after the UE 2 receives, from the UE 1, information about the resource pool or the carrier in or on which the consistent LBT failures occur, the LCP process or resource selection/reselection may be affected. The foregoing information is applicable to the unicast connection between the UE 1 and the UE 2. Therefore, in a communication process, the BS 2 may schedule a resource of the resource pool or the carrier for the UE 2, or the UE 2 may select the resource pool or the carrier based on Mode 2. In other words, the UE 2 may obtain the resource of the resource pool or the carrier due to another unicast/broadcast/multicast communication requirement. In this case, when performing the LCP process, the UE 2 needs to exclude a unicast connection corresponding to the resource pool or the carrier.

In the foregoing solution, the UE 1 indicates, to the peer UE 2 in the unicast connection with the UE 1, the information about the resource pool or the carrier that is detected by the UE 1 and in or on which the consistent LBT failures occur, to assist the UE 2 in resource selection. In this way, the UE 2 can avoid using the resource of the resource pool or the carrier to perform sidelink communication with the UE 1.

The following describes a scenario in which a single LBT failure occurs. In this manner, sidelink communication reliability may be improved. It may be understood that for the single LBT failure, the following method may be performed before the consistent LBT failures described above and before failure information is exchanged between the terminals or between the terminal and the base station (for example, 303 to 307), or may be independent of the foregoing exchange. For example, the first terminal may determine, based on the obtained sidelink grant resource, whether to perform LBT detection. If the first terminal determines not to perform the LBT detection, the detection may not be performed on subsequent consistent LBT operations. If the first terminal determines to perform the LBT detection, the first terminal may further determine, based on a case whether there is to-be-transmitted data in a process, to feed back an ACK or a NACK to the base station. Alternatively, the first terminal may further perform the LBT detection for a plurality of times, and exchange a detection conclusion, for example, occurrence of the consistent LBT failures, with the peer terminal or the base station. For a method related to the LBT detection performed for the plurality of times, refer to the foregoing descriptions. Details are not described again.

In a case, this embodiment of the present invention may further include:
The first terminal receives a sidelink grant resource from the base station.

When there is no to-be-transmitted data in a process corresponding to the sidelink grant resource, the first terminal skips or suspends the LBT detection on the sidelink grant resource.

In another case, this embodiment of the present invention may further include:
The first terminal receives a sidelink grant resource from the base station.

The first terminal performs the LBT detection on the sidelink grant resource.

When there is to-be-transmitted data in a process corresponding to the sidelink grant resource and an LBT failure occur, the first terminal feeds back a negative acknowledgment NACK to the base station.

When there is no to-be-transmitted data in the process corresponding to the sidelink grant resource and the LBT failure occur, the first terminal feeds back an acknowledgment ACK to the base station.

Generally, the first terminal may send terminal assistance information (UEAssistanceInformation) to the base station to request the base station to perform sidelink configured grant (sidelink configured grant, sidelink CG). For example, the assistance information may carry one or more of a service periodicity, a message size, a time offset, or a QoS flow identifier, and is used by the base station to determine, based on a QoS parameter corresponding to a previously received QoS flow, to configure the sidelink CG for the first terminal. For example, the time offset indicates a time offset between a time point at which a first piece of discovery information arrives and a reference time point. For example, the reference time point may be a subframe 0 of a system frame number (system frame number, SFN) 0.

The base station configures the sidelink CG for the first terminal based on a request of the first terminal. Optionally, the sidelink CG configuration carries indication information of a resource pool, and the indication information indicates that the sidelink CG is a resource in the resource pool.

For example, after receiving a sidelink grant scheduled by the base station, the first terminal performs LBT detection on the grant, and if the first terminal determines that the LBT failures occur, the first terminal uses the grant to feed back the NACK to the base station.

Generally, after receiving the sidelink grant indicated by the base station by using the DCI, the first terminal indicates the grant to a MAC layer. Then, the MAC layer obtains a transmission block (transmission block, TB) based on the grant, sends the TB to a PHY layer, and waits for the PHY layer to send the TB. Based on an unlicensed spectrum, the PHY layer performs the LBT detection before the grant arrives.

In a sidelink communication scenario, the resource or the grant received by the first terminal may not have a corresponding service or data that needs to be transmitted. In this case, the MAC layer of the first terminal may indicate the PHY layer to skip performing the LBT detection, or suspends the LBT detection that is being performed, to save power. Optionally, if the first terminal does not skip the LBT detection, and the single LBT failure occurs, the first terminal may feed back the NACK to the base station. If no service data needs to be transmitted in the grant, the first terminal may feed back the ACK to the base station, to avoid that the base station continues to schedule a retransmission resource.

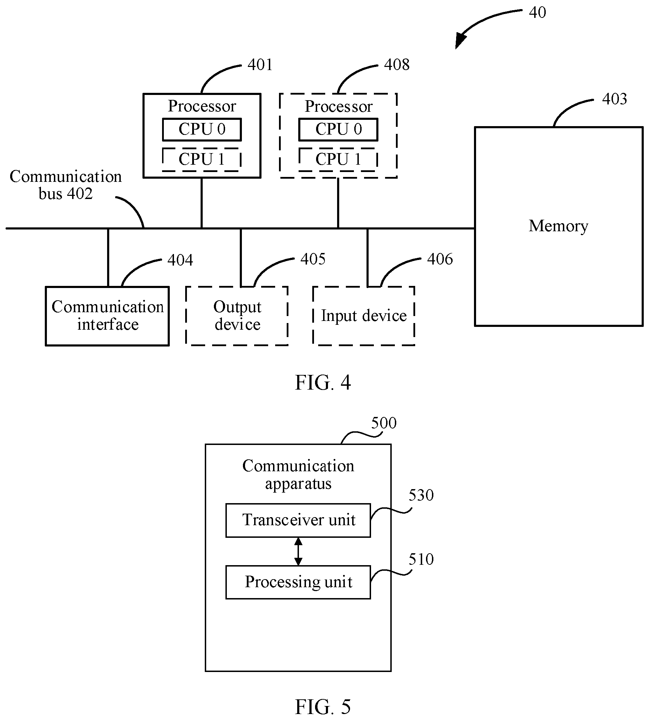

FIG. 4 is a schematic structural diagram of hardware of a communication apparatus 40 according to an embodiment of this application. The communication apparatus 40 includes at least one processor 401, a communication bus 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication bus 402 may include a path on which information is transmitted between the foregoing components.

The communication interface 404 uses any transceiver-type apparatus, and is configured to communicate with another device or a communication network like Ethernet, a radio access network (radio access network, RAN), or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions. Alternatively, the memory 403 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor through the bus. The memory may alternatively be integrated with the processor.

The memory 403 is configured to store and execute application program code in solutions of this application, and the processor 401 controls execution. The processor 401 is configured to execute the application program code stored in the memory 403, to implement the communication method according to the foregoing embodiment of this application.

Alternatively, optionally, in this embodiment of this application, the processor 401 may perform processing-related functions in the communication method provided in the foregoing embodiments of this application. The communication interface 404 is responsible for communicating with another device or network. This is not specifically limited in embodiments of this application.

During specific implementation, in an embodiment, the processor 401 may include one or more CPUs such as a CPU 0 and a CPU 1 in FIG. 4.

During specific implementation, in an embodiment, the communication apparatus 40 may include a plurality of processors, for example, the processor 401 and a processor 408 in FIG. 4. Each of the processors may be a single-core (single-CPU) processor, or may be a multi-core (multi-CPU) processor. The processor herein may be one or more devices, circuits, and/or processing cores configured to process data (for example, computer program instructions). It may be understood that FIG. 4 shows only a simplified design of the communication apparatus 40. During actual application, the communication apparatus may include any quantity of input devices, output devices, processors, memories, and communication interfaces, and the foregoing functions may be provided by any quantity of communication units separately or in a manner of a combination.

During specific implementation, in an embodiment, the communication apparatus 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401 and may receive a user input in a plurality of manners. For example, the input device 406 may be a mouse, a keyboard, a touchscreen device, or a sensor device.

In addition, as described above, the communication apparatus 40 provided in this embodiment of this application may be a chip, a terminal, a base station, a communication device, a network device, a CU, or a DU, or a device with a structure similar to that in FIG. 4. A type of the communication apparatus 40 is not limited in embodiments of this application.

FIG. 5 is a schematic diagram of a structure of a communication apparatus 500 in a communication method according to an embodiment of this application. The communication apparatus may be a terminal, a base station, a communication device, a network device, an apparatus having a function of a terminal or a base station, a chip, or the like in embodiments. Meanings or functions of the following terms or nouns may be understood with reference to the foregoing descriptions, and details or implementations of the following steps or actions may also be understood with reference to the foregoing descriptions. As shown in FIG. 5, the communication apparatus 500 may include a processing unit 510 and a transceiver unit 530. Alternatively, the transceiver unit in the communication device may include a receiving module and a sending module, and the receiving module and the sending module may be connected based on an antenna.

The transceiver unit 530 may be configured to support information receiving and sending between the communication device and the network device. Alternatively, the transceiver unit 530 may be configured to perform processing performed by the communication device or the network device in the communication methods described in the foregoing embodiments.

In a possible design, the communication apparatus may be a terminal device or a chip configured in the terminal device. The following uses a first communication device or a second communication device as an execution body for description.

In a first possible implementation, the first communication device receives configuration information from a network device by using the transceiver unit 530. The configuration information is used by the first communication device to detect an LBT failure that occurs in a first resource pool, the configuration information is associated with a first carrier or the first resource pool, and the first resource pool belongs to the first carrier. In addition, the first communication device sends first indication information to the network device by using the transceiver unit 530. The first indication information indicates the first resource pool in which the consistent LBT failures occur.

Based on the communication manner, flexible configuration of sidelink communication between terminals can be implemented, and system adaptation reliability can be improved.

Optionally, the configuration information includes a maximum quantity of times of the LBT failures and a timer length. A PHY entity of the first communication device indicates, to a MAC entity of the first communication device, the LBT failures that occur in the first resource pool. The MAC entity starts a timer corresponding to the first resource pool, and increases a count value of a counter corresponding to the first resource pool based on the LBT failures that occur in the first resource pool. When the count value of the counter reaches the maximum, the MAC entity determines that the consistent LBT failures occur.

The foregoing LBT detection can ensure that the first communication device learns of a possible LBT failure status in real time, to perform recovery in a timely manner, and ensure validity of the sidelink communication.

Optionally, the first communication device stops resource selection in the first resource pool within predetermined time. Alternatively, when the consistent LBT failures occur in all resource pools of the first carrier, the first communication device reselects a second carrier of a sidelink.

Optionally, the first communication device receives second indication information from a second communication device by using the transceiver unit 530. The second indication information indicates a second resource pool or a second carrier that is on the sidelink and in or on which the consistent LBT failures.

Based on the second indication information, the first communication device may determine whether to perform sidelink communication with the second communication device based on the second resource pool or the second carrier, for example, does not use the foregoing resource within predetermined time, or changes to use another resource, to ensure real-time communication.

Optionally, the first communication device sends third indication information to the network device by using the transceiver unit 530. The third indication indicates the second resource pool or the second carrier.

Optionally, the third indication information further indicates a unicast connection between the first communication device and the second communication device.

Based on the third information, the network device may not schedule the foregoing resource to the first communication device, or schedule a resource to the first communication device based on another resource pool or carrier, to ensure real-time valid communication between the first communication device and the second communication device, and improve scheduling reliability.

Optionally, the first communication device selects a resource in a third resource pool or a resource on a third carrier on the sidelink by using the processing unit 510, and performs unicast connection communication with the second communication device based on the resource.

The third resource pool is different from the second resource pool, or the third carrier is different from the second carrier.

Optionally, the first communication device obtains a sidelink grant resource by using the processing unit 510 or the transceiver unit 530. The grant resource is located in the second resource pool or on the second carrier.

The first communication device does not use the grant resource to perform the unicast connection communication with the second communication device.

Optionally, the first communication device sends fourth indication information to the second communication device by using the transceiver unit 530. The fourth indication information indicates the first resource pool or the first carrier in or on which the consistent LBT failures occur.

Optionally, when the sidelink includes a plurality of carriers, the first indication information further indicates a carrier to which the first resource pool belongs.

Optionally, the first communication device receives a sidelink grant resource from the network device by using the transceiver unit 530. When there is no to-be-transmitted data in a process corresponding to the grant resource, the first communication device skips or suspends LBT detection on the grant resource.

Optionally, the first communication device receives a sidelink grant resource from the network device by using the transceiver unit 530, and the first communication device performs LBT detection on the grant resource. When there is to-be-transmitted data in a process corresponding to the grant resource, the first communication device feeds back a NACK to the network device by using the transceiver unit 530. Alternatively, when there is no to-be-transmitted data in a process corresponding to the grant resource, the first communication device feeds back an ACK to the network device by using the transceiver unit 530.

Based on the foregoing behavior of the communication device, a case in which the network device performs invalid or useless resource scheduling may be avoided. This achieves resource scheduling validity.

In a second possible implementation, the first communication device receives first indication information from the second communication device by using the transceiver unit 530. The first indication information indicates a first resource pool or a first carrier that is on a sidelink and in or on which consistent listen before talk LBT failures occur. In addition, the first communication device sends second indication information to a network device by using the transceiver unit 530. The second indication information indicates the first resource pool or the first carrier.

Optionally, the second indication information further indicates a unicast connection between the first communication device and the second communication device.

Optionally, the first communication device selects a resource in a second resource pool or a resource on a second carrier on the sidelink by using the processing unit 510, and performs unicast connection communication with the second communication device based on the resource.

The second resource pool is different from the second resource pool, or the second carrier is different from the second carrier.

Optionally, the first communication device obtains a sidelink grant resource by using the transceiver unit 530 or the processing unit 510. The grant resource is located in the first resource pool or on the first carrier. The first communication device does not use the grant resource to perform the unicast connection communication with the second communication device.

Optionally, when the sidelink includes a plurality of carriers, the first indication information further indicates a carrier to which the first resource pool belongs.

Optionally, the first communication device receives a sidelink grant resource from the network device by using the transceiver unit 530. When there is no to-be-transmitted data in a process corresponding to the grant resource, the first communication device skips or suspends LBT detection on the grant resource.

Optionally, the first communication device receives a sidelink grant resource from the network device by using the transceiver unit 530. The first communication device performs LBT detection on the grant resource. When there is to-be-transmitted data in a process corresponding to the grant resource, the first communication device feeds back a NACK to the network device by using the transceiver unit 530. Alternatively, when there is no to-be-transmitted data in a process corresponding to the grant resource, the first communication device feeds back an ACK to the network device by using the transceiver unit 530.

In another possible design, the communication apparatus may be a network device or a chip configured in a network device. The following uses the network device as an execution body for description.

In a possible implementation, the network device sends configuration information to the first communication device by using the transceiver unit 530. The configuration information is associated with a first carrier or a first resource pool, and the first resource pool belongs to the first carrier. In addition, the network device receives first indication information from the first communication device. The first indication information indicates the first resource pool in which consistent LBT failures occur.

Optionally, the configuration information includes a maximum quantity of times of the LBT detection and a timer length.

Optionally, the first indication information further indicates a unicast connection between the first communication device and the second communication device.

Optionally, when a sidelink includes a plurality of carriers, the first indication information further indicates a carrier to which the first resource pool belongs.

In this embodiment, the communication device or the network device is presented in a form of function modules or units obtained through division in an integrated manner. The "module" or "unit" herein may be an application-specific integrated circuit (Application-Specific Integrated Circuit, ASIC), a circuit, a processor and a memory that execute one or more software programs or firmware programs, an integrated logic circuit, and/or another component that can provide the foregoing function. In a simple embodiment, a person skilled in the art may figure out that the apparatus 500 may be in a form shown in FIG. 4. For example, the function/implementation process of the transceiver unit 530 in FIG. 5 may be implemented by the processor 401 and the memory 403 in FIG. 4. Specifically, the application program code stored in the memory 403 may be invoked by the processor 401. This is not limited in embodiments of this application. Alternatively, optionally, the function/implementation process of the transceiver unit 530 in FIG. 5 may be implemented by the processor 401 in FIG. 4, or may be implemented by the communication interface 404 in FIG. 4. This is not limited in embodiments of this application. Specifically, the application program code stored in the memory 403 may be invoked by the processor 401. This is not limited in embodiments of this application.

Optionally, an embodiment of this application provides a chip system. The chip system includes a processor, configured to support a communication device implementing the foregoing communication method. In a possible design, the chip system further includes a memory. The memory is configured to store program instructions and data that are necessary for the communication device. The chip system may include a chip, or may include a chip and another discrete device. This is not specifically limited in embodiments of this application.

The controller/processor configured to perform the base station, terminal, base station or terminal in the present invention may be a central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. The controller/processor may implement or execute various example logical blocks, modules, and circuits described with reference to content disclosed in the present invention. The processor may be a combination of processors implementing a computing function, for example, a combination of one or more microprocessors, or a combination of the DSP and a microprocessor.

Methods or algorithm steps described in combination with the content disclosed in the present invention may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal or a base station. Certainly, the processor and the storage medium may exist in a terminal or a base station as discrete components.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, and the communication medium includes any medium that enables a computer program to be transmitted from one place to another. The storage medium may be any available medium accessible to a general-purpose or a dedicated computer.

Further embodiments of the present invention are provided in the following. It should be noted that the numbering used in the following section does not necessarily need to comply with the numbering used in the previous sections.
Embodiment 1. A sidelink communication method, comprising:
   receiving, by a first communication device, configuration information from a network device, wherein the configuration information is used by the first communication device to detect consistent listen before talk LBT failures that occur in a first resource pool, the configuration information is associated with a first carrier or the first resource pool, and the first resource pool belongs to the first carrier; and
   sending, by the first communication device, first indication information to the network device, wherein the first indication information indicates the first resource pool in which the consistent LBT failures occur.
Embodiment 2. The method according to embodiment 1, wherein
   the configuration information comprises a maximum quantity of times of the consistent LBT failures and a timer length;
   a physical PHY entity of the first communication device indicates, to a media access control MAC entity of the first communication device, the LBT failure that occurs in the first resource pool;
   the MAC entity starts a timer corresponding to the first resource pool, and increases a count value of a counter corresponding to the first resource pool based on the LBT failures that occur in the first resource pool; and
   when the count value of the counter reaches the maximum, the MAC entity determines that the consistent LBT failures occur in the first resource pool.
Embodiment 3. The method according to embodiment 1 or 2, further comprising:
   stopping, by the first communication device, resource selection in the first resource pool within predetermined time; or
   reselecting, by the first communication device, a second carrier of the sidelink when the consistent LBT failures occur in all resource pools of the first carrier.
Embodiment 4. The method according to embodiment 1 or 2, further comprising:
   receiving, by the first communication device, second indication information from a second communication device, wherein the second indication information indicates a second resource pool or a second carrier that is on the sidelink and in or on which the consistent LBT failures occur.
Embodiment 5. The method according to embodiment 4, further comprising:
   sending, by the first communication device, third indication information to the network device, wherein the third indication information indicates the second resource pool or the second carrier.
Embodiment 6. The method according to embodiment 5, wherein
   the third indication information further indicates a unicast connection between the first communication device and the second communication device.
Embodiment 7. The method according to embodiment 6, further comprising:
   selecting, by the first communication device, a resource in a third resource pool or a resource on a third carrier on the sidelink, and performing unicast connection communication with the second communication device based on the resource, wherein
   the third resource pool is different from the second resource pool, or the third carrier is different from the second carrier.
Embodiment 8. The method according to embodiment 6 or 7, further comprising:
   obtaining, by the first communication device, a sidelink grant resource, wherein the grant resource is located in the second resource pool or on the second carrier; and
   performing, by the first communication device, the unicast connection communication with the second communication device without using the grant resource.
Embodiment 9. The method according to any one of embodiments 1 to 3, further comprising:
   sending, by the first communication device, fourth indication information to a second communication device, wherein the fourth indication information indicates the first resource pool or the first carrier in or on which the consistent LBT failures occur.
Embodiment 10. The method according to any one of embodiments 1 to 9, wherein
   when the sidelink comprises a plurality of carriers, the first indication information further indicates a carrier to which the first resource pool belongs.
Embodiment 11. The method according to any one of embodiments 1 to 7, further comprising:
   receiving, by the first communication device, a sidelink grant resource from the network device; and
   skipping or suspending, by the first communication device, LBT detection on the grant resource when there is no to-be-transmitted data in a process corresponding to the grant resource.
Embodiment 12. The method according to any one of embodiments 1 to 7, further comprising:
   receiving, by the first communication device, a sidelink grant resource from the network device;
   performing, by the first communication device, LBT detection on the grant resource;
   feeding back, by the first communication device, a negative acknowledgment NACK to the network device when there is to-be-transmitted data in a process corresponding to the grant resource; and
   feeding back, by the first communication device, an acknowledgment ACK to the network device when there is no to-be-transmitted data in the process corresponding to the grant resource.
Embodiment 13. A sidelink communication method, comprising:
   sending, by a network device, configuration information to a first communication device, wherein the configuration information is associated with a first carrier or a first resource pool, and the first resource pool belongs to the first carrier; and
   receiving, by the network device, first indication information from the first communication device, wherein the first indication information indicates the first resource pool in which consistent LBT failures occur.
Embodiment 14. The method according to embodiment 13, wherein
   the configuration information comprises a maximum quantity of times of the LBT failures and a timer length.
Embodiment 15. The method according to embodiment 13 or 14, wherein
   the first indication information further indicates a unicast connection between the first communication device and a second communication device.
Embodiment 16. The method according to any one of embodiments 13 to 15, wherein
   when the sidelink comprises a plurality of carriers, the first indication information further indicates a carrier to which the first resource pool belongs.
Embodiment 17. A sidelink communication method, comprising:
   receiving, by a first communication device, first indication information from a second communication device, wherein the first indication information indicates a first resource pool or a first carrier that is on a sidelink and in or on which consistent listen before talk LBT failures occur; and
   sending, by the first communication device, second indication information to a network device, wherein the second indication information indicates the first resource pool or the first carrier.
Embodiment 18. The method according to embodiment 17, wherein
   the second indication information further indicates a unicast connection between the first communication device and the second communication device.
Embodiment 19. The method according to embodiment 18, further comprising:
   selecting, by the first communication device, a resource in a second resource pool or a resource on a second carrier on the sidelink, and performing unicast connection communication with the second communication device based on the resource, wherein
   the second resource pool is different from the second resource pool, or the second carrier is different from the second carrier.
Embodiment 20. The method according to any one of embodiments 17 to 19, further comprising:
   obtaining, by the first communication device, a sidelink grant resource, wherein the grant resource is located in the first resource pool or on the first carrier; and
   performing, by the first communication device, the unicast connection communication with the second communication device without using the grant resource.
Embodiment 21. The method according to any one of embodiments 17 to 20, wherein
   when the sidelink comprises a plurality of carriers, the first indication information further indicates a carrier to which the first resource pool belongs.
Embodiment 22. The method according to any one of embodiments 17 to 19, further comprising:
   receiving, by the first communication device, a sidelink grant resource from the network device; and
   skipping or suspending, by the first communication device, LBT detection on the grant resource when there is no to-be-transmitted data in a process corresponding to the grant resource.
Embodiment 23. The method according to any one of embodiments 17 to 19, further comprising:
   receiving, by the first communication device, a sidelink grant resource from the network device;
   performing, by the first communication device, LBT detection on the grant resource;
   feeding back, by the first communication device, a negative acknowledgment NACK to the network device when there is to-be-transmitted data in a process corresponding to the grant resource; and
   feeding back, by the first communication device, an acknowledgment ACK to the network device when there is no to-be-transmitted data in the process corresponding to the grant resource.
Embodiment 24. An apparatus, configured to perform the method according to any one of embodiments 1 to 23.
Embodiment 25. An apparatus, wherein the apparatus comprises a processor, a memory, and instructions that are stored in the memory and that are able to be run on the processor, and when the instructions are run, the apparatus is enabled to perform the method according to any one of embodiments 1 to 12 and 17 to 23.
Embodiment 26. An apparatus, wherein the apparatus comprises a processor, a memory, and instructions that are stored in the memory and that are able to be run on the processor, and when the instructions are run, the apparatus is enabled to perform the method according to any one of embodiments 13 to 16.
Embodiment 27. A terminal, comprising the apparatus according to embodiment 25.
Embodiment 28. A base station, comprising the apparatus according to embodiment 26.
Embodiment 29. A communication system, comprising the terminal according to embodiment 27 and the base station according to embodiment 28.
Embodiment 30. A computer-readable storage medium, comprising instructions, wherein when the instructions are run on a computer, the computer is enabled to perform the method according to any one of embodiments 1 to 23.
Embodiment 31. A computer program product, wherein when the computer program product is run on a computer, the computer is enabled to perform the method according to any one of embodiments 1 to 23.

In the foregoing embodiments of the present invention, the communication method provided in embodiments of the present invention is described from the perspective of each network element and the interaction between the network elements. It may be understood that each network element, like the terminal or the communication apparatus, includes hardware structures and/or software modules for executing corresponding functions, to implement the foregoing functions. A person of ordinary skill in the art should easily be aware that, in combination with the examples described in embodiments disclosed in this specification, units, algorithms and steps, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention shall fall within the protection scope of the present invention.

## Claims

1. A sidelink communication method, comprising:
receiving, by a first terminal, a sidelink grant resource from a base station;
performing, by the first terminal, listen before talk, LBT, detection on the sidelink grant resource;
feeding back, by the first terminal, a negative acknowledgment, NACK, to the base station when there is to-be-transmitted data in a process corresponding to the sidelink grant resource and an LBT failure occur.

2. The method according to claim 1, further comprising:
feeding back, by the first terminal, an acknowledgment, ACK, to the base station when there is no to-be-transmitted data in the process corresponding to the sidelink grant resource.

3. The method according to claim 1 or 2, further comprising:
receiving, by the first terminal, configuration information from the base station, wherein the configuration information is used to detect consistent LBT failures that occur in a first resource pool, the configuration information is associated with a first carrier or the first resource pool, and the first resource pool belongs to the first carrier;
sending, by the first terminal, first indication information to the base station, wherein the first indication information indicates the first resource pool in which the consistent LBT failures occur.

4. The method according to any one of claims 1 to 3, wherein the sidelink grant is indicated by the base station by using a downlink control information, DCI, and the method further comprises:
indicating, by the first terminal, the sidelink grant to a medium access control, MAC, layer;
obtaining, by the MAC layer, a transmission block, TB, based on the sidelink grant, and sending the TB to a physical, PHY, layer, and waiting for the PHY layer to send the TB;
performing, by the PHY layer, the LBT detection before the sidelink grant arrives based on an unlicensed spectrum.

5. The method according to any one of claims 1 to 4, further comprising:
sending, by the first terminal, terminal assistance information to the base station to request the base station to perform sidelink configured grant.

6. A sidelink communication method, comprising:
sending, by a base station, a sidelink grant resource to a first terminal; and
receiving, by the base station, a negative acknowledgment, NACK, from the first terminal when there is to-be-transmitted data in a process corresponding to the sidelink grant resource and a listen before talk, LBT, failure occur.

7. The method according to claim 6, further comprising:
receiving, by the base station, an acknowledgment, ACK, from the first terminal when there is no to-be-transmitted data in the process corresponding to the sidelink grant resource.

8. The method according to claim 6 or 7, further comprising:
sending, by the base station, configuration information to the first terminal, wherein the configuration information is used to detect consistent LBT failures that occur in a first resource pool, the configuration information is associated with a first carrier or the first resource pool, and the first resource pool belongs to the first carrier;
receiving, by the base station, first indication information from the first terminal, wherein the first indication information indicates the first resource pool in which the consistent LBT failures occur.

9. The method according to any one of claims 6 to 8, further comprising:
receiving, by the base station, terminal assistance information from the first terminal to request the base station to perform sidelink configured grant.

10. An apparatus, configured to perform the method according to any one of claims 1 to 9.

11. An apparatus, wherein the apparatus comprises a processor, a memory, and instructions that are stored in the memory and that are able to be run on the processor, and when the instructions are run, the apparatus is enabled to perform the method according to any one of claims 1 to 9.

12. A computer-readable storage medium, comprising instructions, wherein when the instructions are run on a computer, the computer is enabled to perform the method according to any one of claims 1 to 9.
